# EUROPEAN PATENT APPLICATION

(11) **EP 4 644 056 A1**
(43) Date of publication of application: **05.11.2025**
(21) Application number: 24173287.4
(22) Date of filing: 30.04.2024
(51) Int. Cl.: B25J 9/16, G05B 19/4067

(54) **AUTOMATIC COLLISION RECOVERY FOR MACHINES**

(71) Applicant: Siemens Aktiengesellschaft, 80333 München (DE)
(72) Inventor: Wurm, Kai, 81739 München (DE); Neubauer, Werner, 81739 München (DE); Schmitt, Philipp Sebastian, 80797 München (DE)
(74) Representative: Siemens Patent Attorneys

(57) **Abstract**

Embodiments of the present disclosure provide a method and system for automatic recovery of a machine after a collision event occurred within a workspace environment of the machine. The method may comprise recording a plurality of configurations of a machine during execution of a task; calculating based on the plurality of recorded configurations, a swept volume occupied by the machine during execution of the task; in response to a collision event, determining, based on the swept volume, a recovery sequence of movements for the machine; and using the recovery sequence of movements to lead the machine back to a predefined known safe position after the collision event occurred.

## Description

The present invention relates to a method for automatic recovery of a machine after collision with an object within the machine's environment. Moreover, the invention relates to a system for automatic recovery of a machine after collision with an object within the machine's environment.

For machines that move automatically, and especially for machines that perform complicated motions during execution of a task, a machine operator needs to define a designated workspace. This designated workspace is considered to be the volume around the moving parts of the machine that is considered safe to operate in. Several aspects can define what is considered a volume that is safe to operate in but in most scenarios such a safe volume should not contain unknown structures, objects, or people that the machine can collide with. All known aspects of the environment, especially potential collisions, are considered in the machine program (i.e., the configuration of the machine).

But even without moving outside of the designated safe workspace and if all known parts of the environment are considered in the machine program, collisions of moving parts of machines and the environment can occur. This can be the case when new objects or structures are introduced into the workspace of a machine without adapting the machine configuration. Such collisions can also occur if existing objects in the workspace are moving within the workspace without the machine being reconfigured to account for this situation. Another case when collisions can occur is if objects are considered in the machine program, but the description of the objects is inaccurate, e.g., due to production tolerances or when processing steps are not executed as anticipated (e.g., a milling tool is taking off less material then projected). Frequently, collisions can also occur during programming and commissioning of the machines.

If collisions of machines and the environment occur, most machines detect these collisions and switch into a safety state. After switching into the safety state, machines will not move automatically until they are recovered by an operator to a known safe state and the safety event is cleared.

The manual recovery process of machines can be complicated if the kinematic of the machine is complex (i.e., the machine is a robot with a high number of joints and axles, a high number of degrees of freedom) or the environment is cluttered with parts and generally complicated or both. For example, some factories or facilities are very large, and it can take some time to get a technician to where they need to be to recover a machine. Operators must use basic motion commands on an operator panel of the machine and care must be taken so no further collisions are caused by the operator during recovery. Another downside to manual recovery is the length of time it would take to notify a trained technician and for the technician to make their way to a problem robot. In numerous cases, a trained technician is not always onsite and requires many hours of downtime until the robot can be safely recovered. These problems argue in favour of designing an automated recovery option to save time and costs.

In this context, it should be noted that, independent of the grammatical term usage, individuals with male, female or other gender identities are included within the term.

As explained above, until now actions for recovering a machine after a collision event within and/or around its operating environment are selected manually, on site, by a trained operator.

Thus, it is one object of the present invention to provide an automatic way of recovering a machine after the machine experienced a collision event within and/or around its environment.

Accordingly, a collision recovery method for automatically recovering a machine to a safe position is provided. The method comprises the following steps:
recording a plurality of configurations of a machine, each configuration representing a sequence of movements performed by the machine during execution of a task;
calculating based on the plurality of recorded configurations, a plurality of volumes occupied by the machine during execution of the task;
combining the plurality of volumes to generate a swept volume occupied by the machine during the execution of the task;
in response to a collision event, determining based on the swept volume, a recovery sequence of movements for the machine; and
using the recovery sequence of movements to lead the machine back to a predefined known safe position after the collision event occurred.

Conventionally the problem of recovering a machine (e.g., a robot) after a crash is solved by an operator using a machine programming and operating device (in the context of robots also called a "teach pendant"), wherein the machine is moved by basic commands (e.g., "left", "right, "up", "down", etc.) into a known safe state from which the machine program can be restarted. In contrast to this previous approach, the here described method provides an automatic way, without the need for human interaction whatsoever, for initiating machine recovery actions to address the risks that are associated with recovery of machines, especially when the machines have a high number of degrees of freedom and where the machines perform fast complex movements or wherein the workspace environment of the machines is by default complex and agglomerated.

Thus, the provided method may enhance the overall safety of a machine as no human intervention or interaction is needed, thus making addressing collisions and performing corresponding actions faster and more reliable for bringing the machine to a known safe state.

As mentioned above, there are problems associated with the manual recovery process. These problems are relevant for many machines such as handling devices, CNC machine tools, mills, robots, gantries, mobile robots, and many other machines that can potentially collide with parts or objects within and round their operating environments. For some machines, recovery routines can be created that assist operators in recovering a machine from common failure scenarios, however it is currently difficult to recover a machine which has a complex kinematic chain, or which is placed in a complex environment.

In the method described above, a plurality of configurations of at least one machine may be recorded. For example, a motion recording device may be used to record configurations associated with movements of the machine during execution of a task including a start and a goal/finish position. Such a recording device may be a hardware component coupled to the machine, a software module configured within a programmable logic controller (PLC) of the machine or another software module in communication with the PLC of the machine where a machine program for executing a task is residing. The motion recording device may constantly keep a record of the movements of a machine or robot for a user-defined time span, e.g., the last 10 seconds of movement, much like a "flight recorder" used in aerospace for the analysis of crashes and other exceptional situations. Thus, such a motion recording device may be implemented as a storage of machine configurations over time. For example, in the case of a 6-degree-of-freedom robot, a robot configuration contains at least the joint angles of each of the 6 joints and a timestamp. These configurations may be stored in a list or ring buffer with a user-defined length or storage capacity. For many applications a reasonable capacity would hold a few seconds of machine movement. The recording of machine configurations may be stopped by a user-defined event, such as a safety event that stops the machine.

As a further example, the motion recording device may be a physical "black box" recorder that may be configured from a PLC and may receive data over an industrial fieldbus such as "Profinet". The recording device may also be a software application executed on a robot controller, in a PLC, or any other computer able to access machine motion state configurations. The recording device may be implemented so that data may be stored even in case of a power or network outage.

According to an embodiment, each of the recorded plurality of configurations may include a timestamp associated with the recorded configuration that may be used to directly compute the recovery sequences. For example, in response to the collision event, the recovery sequence of movements for the machine may be determined based on the timestamps associated with each configuration, the execution of the task may be ceased, and using the recovery sequence of movements the machine may be reversed back (i.e., in the reversed time order of the timestamps) to a predefined known safe position after the collision event occurred. Therefore, an assisted recovery method from a collision is achieved.

The above-mentioned method of computing a sequence of motion commands to reverse a machine based on the timestamps of configurations, assumes that a safe-to-execute motion command can always be directly computed from two consecutive machine configurations. If a frequency with which the machine configurations are stored is high enough, for example, a machine configuration is stored every 4ms, this may likely be the case since the machine will have moved in a nearly linear motion during that time. If, however, machine configurations are stored less frequently, e.g., only once per second, it can no longer be assumed that the machine moved in a linear motion from one configuration to the next, since the machine could have followed a much more complex trajectory between two configurations. That is especially true for machines and/or robots that move fast.

Additionally and/or alternatively according to a further embodiment, the above-mentioned plurality of recorded configurations may be used to calculate a plurality of volumes occupied by the machine during execution of the task, and further the volumes may be combined to generate a swept volume occupied by the machine during execution of the task. For example, the swept volume may represent a three-dimensional (3D) space in which a robot can safely operate collision-free. The swept volume is the physical volume displaced by an object moving along a trajectory between two configurations, i.e., configuration pair. The swept volume may be determined by any conventional volume estimation algorithms based on a machine model including but not limited to, a kinematic chain, a Denavit-Hartenberg, DH, convention, a kinematic model in simulation description format, SDFormat, and a geometric model of the machine. Exact swept volume computation is generally intractable due to the complex nonlinear relation between the configuration pair, i.e., for start and end poses and corresponding geometry of the robot. As an exemplary result, most algorithms focus on, but are not limited to, generating approximations, such as occupation grid-based, convex polyhedra-based and boundary-based methods. Other methods include computing swept volumes using variations of a Gilbert-Johnson-Keerthi (GJK) distance algorithm or include using deep neural networks (DNNs) to approximate swept volumes. In an example, occupation grid-based approaches decompose the workspace of the robot into voxels, in order to record the robot's occupation in the workspace as it executes a trajectory.

According to a further embodiment, the method may comprise computing the swept volume as a voxel grid-based volumetric representation to obtain a free space representation. For example, a mapped area (i.e., in this case the swept volume) is discretized using a grid of cubic volumes (i.e., voxels) of equal size. Thus, a voxel represents a value in a 3D space region limited by given sizes, which has its own nodal point coordinates in an accepted coordinate system, its own form, its own state parameter that indicates its belonging to some modelled object and has properties of modelled region. For example, a state parameter can indicate an occupancy of the voxel in the 3D space, thus a 3D occupancy grid mapping, such as OctoMap approach may be used. The OctoMap implementation is based on an octree hierarchical data structure for spatial subdivision in 3D, wherein each node in an octree represents the space contained in a voxel. Octrees are most often used to partition a 3D space by recursively subdividing it into eight octants. In its most basic form, octrees can be used to model a Boolean property. For example, in the context of robotic mapping, this is usually the occupancy of a volume. If a certain volume is measured as occupied (e.g., one or more voxels in a swept volume), the corresponding nodes in the octree are initialized. Any uninitialized node could be free or unknown in this Boolean setting. To resolve this ambiguity, free cells can be explicitly represented as free nodes in the octree, and thus a free space representation can be obtained. An advantage of using an octree approach (such as OctoMap) is that the map is able to model arbitrary environments without prior assumptions about it, therefore it can be used to discretize an arbitrary-shaped swept volume of a robot. In addition, the representation models occupied areas as well as free space representations, thus making the map attractive for safe robot navigation scenarios. Furthermore, the map may be stored efficiently, both in memory and on disk, and it may be possible to generate compressed files for later usage or convenient exchange between robots even under bandwidth constraints.

Further, the method may comprise, generating, by a motion planning algorithm, using the machine model and the free space representation, the recovery sequence of movements. The motion planning algorithm for generating the recover sequence of movements may be any suitable one. For example, the motion planning algorithm may be used to perform collision checks based on the machine model, which may be a robot's full kinematic chain and any attached objects. In another example, the motion planning algorithm may be any conventional algorithm such as, but not limited to, graph search-based algorithms (e.g., A*, hybrid A*, Dijkstra's algorithm), sample-based algorithms (e.g., rapidly-exploring random tree (RRT), probabilistic roadmap method (PRM), etc.), interpolating curve algorithms, and/or machine learning, ML, -based algorithms. For example, in the case of ML-based algorithms motion planning may be realized by attaching destination and safe paths with big "rewards", while obstacles are attached with penalties (negative rewards). Optimal path may then be found according to total rewards from initial place (e.g., collision position) to destination (e.g., safe position).

According to a further embodiment, the motion planning algorithm may use the collision event to determine an initial position within the free space representation where the collision event occurred, then update respective voxels corresponding to the initial position as occupied voxels in the free space representation, and determine, using the updated free space representation, the recovery sequence of movements as a collision-free path within the updated free space representation from the initial position to the predefined known safe position. For example, the motion planning algorithm may use the above-mentioned octree mapping modelling the environment of the robot, and based on the octree leaves it may construct a search tree. The search tree may then be defined by a vicinity of leaves in the octree. The motion planning algorithm may then search a succession of obstacle free leaves which leads from a start point (e.g., the point where the collision event occurred) to a target point (e.g., the predefined known safe position or a last safe position that preceded the collision event).

According to a further embodiment, recording the plurality of configurations comprises recording the plurality of configurations at a predefined frequency until a predefined event occurs. The recorded configurations can be analyzed retrospectively to identify patterns, trends, or correlations. This can help in identifying the causes of past issues, optimizing system performance, or making informed decisions for future configurations of the machines.

According to a further embodiment, the method further comprises storing the plurality of configurations in a list or ring buffer with a predefined length or storage capacity. By limiting the storage capacity to a predefined length, the system ensures that only the most recent configurations are retained. This helps in optimizing memory usage, especially in scenarios where configuration changes occur frequently.

According to a further embodiment, the method further comprises in response to the collision event, ceasing execution of the task and ceasing recording of further configurations of the machine. This has the advantage that potential damages to the machine can be prevented and recording unnecessary further configurations after the collision do not fill up the storage with unnecessary data.

According to a further embodiment, the method further comprises detecting the collision event based on data from at least one of: a mechanical switch, a pressure sensor, a torque sensor, an optical sensor, an ultrasonic sensor, a camera device, and/or a LiDAR device. For example, robotic collision sensors detect when a robot arm encounters an obstruction, absorb any crash energy, and quickly stop the robot to prevent costly damage to the robot arm and/or tooling. In another example, collision detection sensors may be integrated into the robot arm and may measure abnormal torque levels on any robot axis. This may cause the robot to stop quickly and thus back off to relieve forces between the robot and environment. In yet another example, a camera device or LiDAR device may measure a distance between the robot and objects around and/or within the workspace of the robot and based on predefined guarding distance thresholds a collision event may be raised in response to the objects being at a distance less than any of the guarding distance thresholds. The collision event detection mechanisms presented herein represent non-limiting examples, and any other feedback mechanisms may additionally or alternatively be implemented as it can be recognized by one skilled in the art.

The herein described methods allow a substantially higher level of automation of machine recovery after crashes.

According to a further aspect, a system for collision recovery of a machine is provided. The system comprises:
at least one machine configured to perform a task;
at least one recording device communicatively connected to the machine, wherein the recording device is configured to:
   store a plurality of configurations of the machine, each configuration representing a sequence of movements performed by the machine during execution of the task; and
   a machine recovery device configured to:
      receive the stored plurality of configurations of the machine from the recording device;
      calculate based on the plurality of recorded configurations a plurality of volumes occupied by the machine during execution of the task;
      combine the plurality of volumes to generate a swept volume occupied by the machine during the execution of the task;
      in response to a collision event, determine based on the swept volume, a recovery sequence of movements for the machine; and
      use the recovery sequence of movements to lead the machine back to a predefined known safe position after the collision event occurred.

Respective entities, e.g., the at least one recording device and the machine recovery device, may be implemented in hardware and/or in software. If said entity is implemented in hardware, it may be embodied as a device, e.g., as a computer or as a processor or as a part of a system, e.g., a computer system. If said entity is implemented in software, it may be embodied as a computer program product, as a function, as a routine, as a program code or as an executable object.

The embodiments and features described with reference to the methods of the present invention apply mutatis mutandis to the system of the present invention.

According to a further aspect, the invention relates to a non-transitory computer readable medium having processor-executable instructions stored thereon that, when executed by at least one processor, cause the at least one processor to perform the method for automatic recovery of machines according to any one of the methods described herein.

Other embodiments include a computer program product comprising instructions which when executed by at least one processor, cause the at least one processor to perform the method according to any one of the methods described herein.

A computer program product, such as a computer program means, may be embodied as a memory card, USB stick, CD-ROM, DVD or as a file which may be downloaded from a server in a network. For example, such a file may be provided by transferring the file comprising the computer program product from a wireless communication network.

Further possible implementations or alternative solutions of the invention also encompass combinations - that are not explicitly mentioned herein - of features described above or below regarding the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:
Fig. 1 is a schematic diagram illustrating a robot colliding with an object.
Fig. 2 is a schematic diagram illustrating a robot colliding with an object.
Fig. 3 a schematic diagram illustrating an example system for automatic recovery of a machine, according to one or more embodiments of the present disclosure.
Fig. 4 is a flow diagram illustrating an example method for automatic recovery of a machine, according to one or more embodiments of the present disclosure.

In the figures, like reference numerals designate like or functionally equivalent elements, unless otherwise indicated.

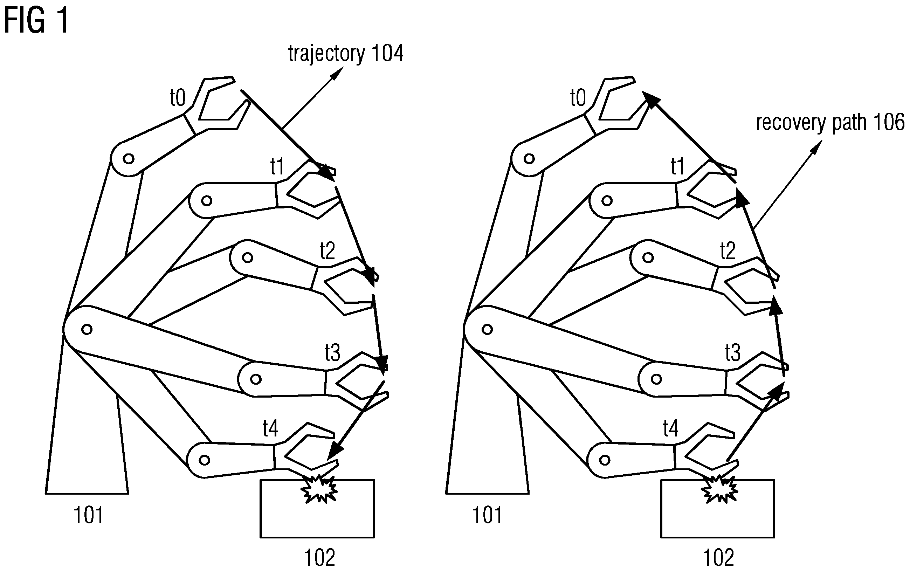

Fig. 1 shows an exemplary robot (101) moving along a trajectory (104) including different points in time, e.g., such as a start point (t0) and an end point (t4) after colliding with an object (102) within the workspace of the robot (101). In a case where the robot (101) does not have a complicated kinematic chain (which may include a high number of rigid parts and joints) and if the robot (101) does not perform complex sequence of movements between two consecutive configurations corresponding to two consecutive timestamps along the trajectory (104), the robot (101) (or a controller of the robot (101) not shown) may use one or more two stored configurations between two consecutive timestamps to recover the robot (101) to a safe position after a collision with the object (102). A reversing algorithm may then be used as a motion planning algorithm to generate a recovery path (106) that may bring the robot (101) back to the start point (t0) or to any of the other previous points (t1-t3) assumed to be collision free.

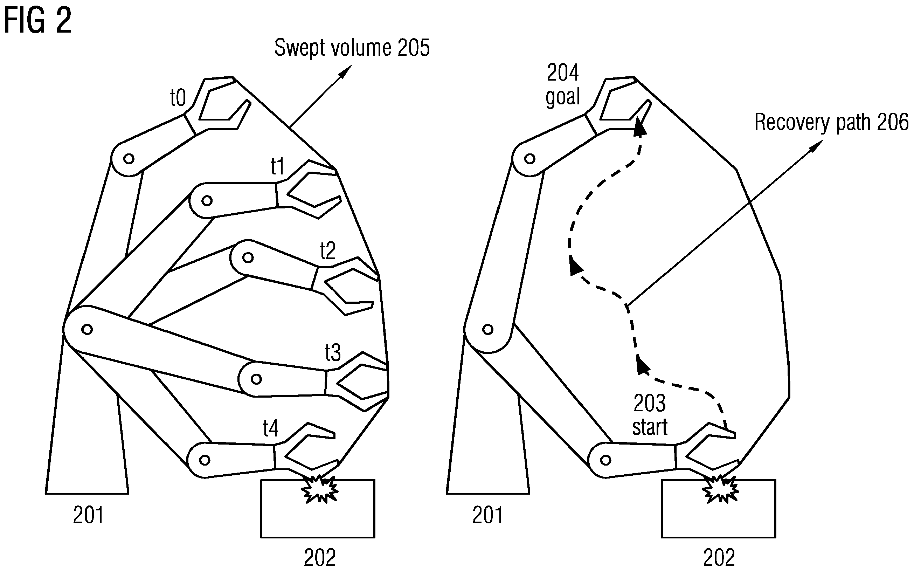

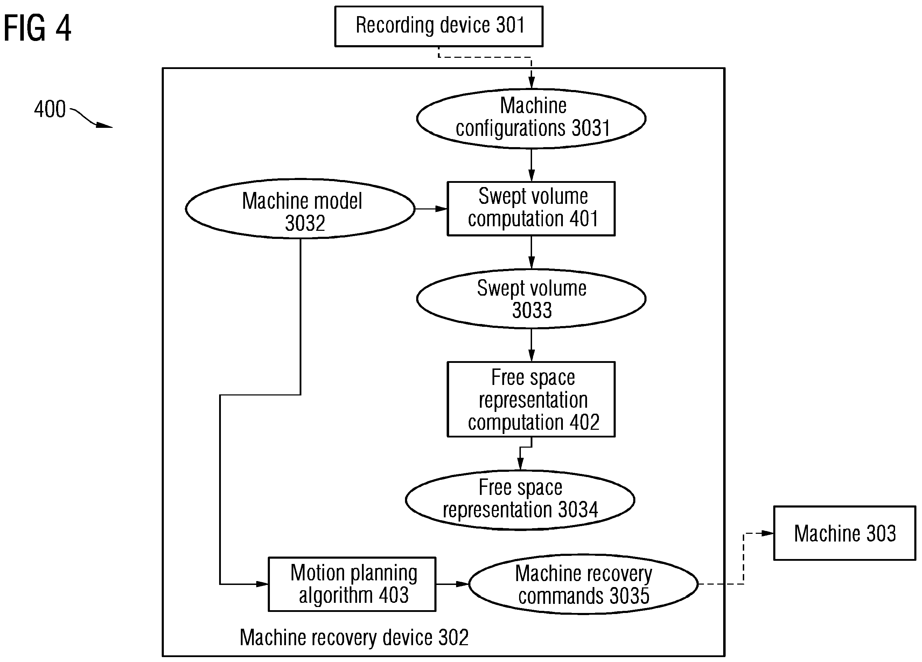

Fig. 2 shows an exemplary robot (201) operating within a workspace, i.e., a swept volume (205), assumed to be collision free at different time points (t0-t4) before collision with an object (202). The robot (201) may operate at a faster rate than the robot (101) illustrated in Fig. 1 and may follow a more complex path (not shown) - between a starting point (t0) and an end point (t4) - than trajectory (104) of robot (101). The robot (201) may be recovered from collision with the object (202) by the method (400) of Fig. 4 as described below, to generate a recovery path (206) that automatically brings the robot (201) from the collision point, i.e., start (203) back to a safe position, i.e., goal (204), without any interaction from a human operator.

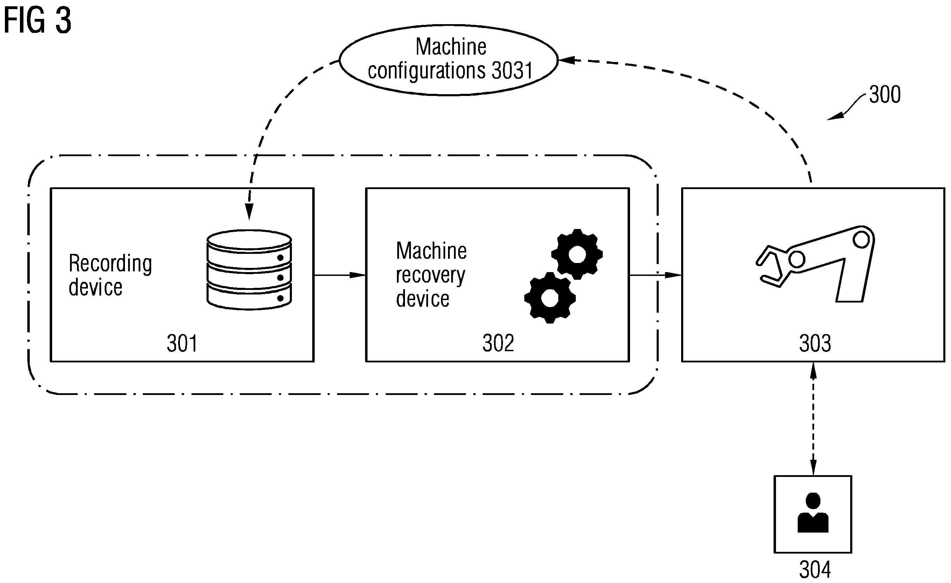

Fig. 3 illustrates an example system (300) for automatic recovery of a machine (303) such as robot (201) of Fig. 2, according to one or more embodiments of the present disclosure. The system (300) may comprise a recording device (301), which may act much like a "flight recorder", and which may be configured to record a plurality of configurations (3031) of the machine (303), each configuration representing a sequence of movements performed by the machine (303) within a collision-free workspace corresponding to a volume swept by the machine (303) during execution of a task. For example, the recording device (301) may be implemented as a hardware and/or software module external to the machine (303) or may be a hardware and/or software module internal to the machine (303) or otherwise implemented for example within a PLC of the machine (303). The system (300) may further comprise a machine recovery device (302) communicatively coupled to the recording device (301), which is configured to receive the recorded machine configurations from the recording device (302). The machine recovery device (302) may be configured to use the plurality of machine configurations (3031) to automatically generate, in response to a collision event, a recovery sequency of movements (3035) for bringing the machine (303) back to a safe position. For example, the machine recovery device (302) may be implemented as a hardware and/or software module external to the machine (303) or may be a hardware and/or software module internal to the machine (303) or otherwise implemented for example within a PLC of the machine (303). The recording device (301) and the machine recovery device (302) may be implemented in hardware and/or in software together as one module or separately. If either of the devices (301, 302) is implemented in hardware, it may be embodied as a device, e.g., as a computer or as a processor or as a part of a system, e.g., a computer system. If said entity is implemented in software, it may be embodied as a computer program product, as a function, as a routine, as a program code or as an executable object.

In one example configuration, the system (300) may include at least one processing unit (or processor) and memory. The processor may comprise one or more microprocessors, microcontrollers, hardware circuits, discrete logic circuits, hardware registers, digital signal processors (DSPs), field-programmable gate arrays (FPGAs), application-specific integrated circuits (ASICs), programmable logic controllers (PLCs) or a combination thereof. For example, the processor and memory unit may be incorporated into the system (300) or may be a computer or computer communicatively linked thereto such as the recording device (301) and/or the machine recovery device (302). The processor may be programmable hardware capable of executing software instructions stored (to perform the methods described herein), e.g., as a machine-readable computer program in the memory. The memory may comprise any non-transitory machine-readable media known in the art or that may be developed, whether volatile or non-volatile, including but not limited to solid state media (e.g., SRAM, DRAM, DDRAM, ROM, PROM, EPROM, flash memory, solid state drive, etc.). Further, the system (300) may also include storage devices including, but not limited to removable storage devices (e.g., Secure Digital (SD) card, miniSD card, microSD card, memory stick, thumb-drive, USB flash drive, ROM cartridge, Universal Media Disc), fixed drive (e.g., magnetic hard disk drive), or the like, wholly or in any combination. Similarly, the system (300) may also have input device(s) such as keyboard, mouse, pen, voice input, etc. and/or output device(s) such as a display, speakers, printer, etc. Also included in the system (300) may be one or more communication connections, such as LAN, WAN, point to point, etc. In embodiments, the connections may be operable to facilitate point-to-point communications, connection-oriented communications, connectionless communications, etc. The system (300) may further include interface circuitry configured to control input and output (I/O) data paths of the system (300). For example, such I/O data paths may include data paths for receiving tasks or other instructions from a user (304) and/or for exchanging signals with the machine (201, 303) over the one or more communication connections.

The invention is not limited to stationary machines (201, 303) but may also extend to mobile machines. For example, if a robot arm is mounted on a mobile base, the same principles can be applied. In such a case, the mobile base is treated as an extension of the robot kinematic chain, that is, the state of the mobile base is also treated as part of the recorded machine configurations (3031). For example, for a mobile base that is moving on flat ground, this state is usually encoded as a position on the ground plane and a rotation of the base relative to some global reference frame, so there are three degrees of freedom (x, y, rotation). If the robot mounted to the base has 6 additional degrees of freedom, the overall system configuration can be described by the 3 degrees of freedom of the mobile base and the 6 degrees of freedom of the robot arm. Recovery of such a mobile machine is equivalent to the recovery of a stationary machine (201, 303) and the methods for automatic recovery after collisions described herein can be applied.

In the following, with reference to Fig. 4, an example method (400) for automatically recovering a machine (201, 303) from a collision with an object (202), which can be carried out by the system (300) of Fig. 3 will be exemplary described. In a first step, a plurality of machine configurations (3031) of a machine (201, 303) during execution of a task, are received. In a second step, based on the plurality of machine configurations (3031), a plurality of volumes occupied by the machine during execution of the task is calculated. In step 401, the plurality of volumes is combined to generate a swept volume (3033) occupied by the machine (201, 303) during execution of the task. In step 403, in response to a collision event, a recovery sequence of movements (3035) for the machine (201, 303) is determined based on the swept volume (3033). In a final step, the recovery sequence of movements (3035) is used to recover the machine (201, 303) back to a predefined known safe position after the collision event occurred.

The embodiments of the present disclosure provide a system (300) and method (400) that can automate the recovery of machines (201, 303) to a known safe state after collisions with their environment without any interaction from a human operator (304). Beyond automated crash recovery, the plurality of recorded machine configurations (3031) including machine movements can also be useful during commissioning of the machine (201, 303), where machine movements often need to be studied in more detail by the human operator (304).

Although the present invention has been described in accordance with preferred embodiments, it is obvious for the person skilled in the art that modifications are possible in all embodiments.

## Claims

1. A computer-implemented method (400) for collision recovery of a machine (201, 303), comprising:
recording, by one or more processors, a plurality of configurations (3031) of a machine (201, 303), each configuration representing a sequence of movements performed by the machine (201, 303) during execution of a task;
calculating, by the one or more processors, based on the plurality of recorded configurations, a plurality of volumes occupied by the machine during execution of the task;
combining (401), by the one or more processors, the plurality of volumes to generate a swept volume (3033) occupied by the machine (201, 303) during execution of the task;
in response to a collision event, determining (403), by the one or more processors, based on the swept volume (3033), a recovery sequence of movements (3035) for the machine (201, 303); and
using, by the one or more processors, the recovery sequence of movements (3035) to lead the machine (201, 303) back to a predefined known safe position (204) after the collision event occurred.

2. The method of claim 1, wherein combining (401) the plurality of volumes to generate the swept volume (3033) further comprises using a machine model (3032); and/or
wherein the swept volume (3033) is a collision-free volume occupied by the machine (201, 303) during the execution of the task; and/or
wherein determining (403) the recovery sequence of movements (3035) based on the swept volume (3033) further comprises:
computing the swept volume (3033) as a voxel grid-based volumetric representation to obtain (402) a free space representation (3034); and
generating, by a motion planning algorithm (403), using the machine model (3032) and the free space representation (3034), the recovery sequence of movements (3035).

3. The method of claim 1 or 2, wherein the machine model (3032) includes at least one of: a kinematic chain, a Denavit-Hartenberg, DH, convention, a kinematic model in simulation description format, SDFormat, and a geometric model of the machine.

4. The method of any of the preceding claims, wherein the motion planning algorithm (403) comprises:
using the collision event to determine an initial position (203) within the free space representation (3034) where the collision event occurred;
updating respective voxels corresponding to the initial position as occupied voxels in the free space representation (3034); and
determining, using the updated free space representation, the recovery sequence of movements (3035) as a collision-free path (206) within the updated free space representation from the initial position (203) to the predefined known safe position (204).

5. The method of any of the preceding claims, wherein recording the plurality of configurations (3031) comprises recording the plurality of configurations at a predefined frequency until a predefined event occurs.

6. The method of any of the preceding claims further comprising storing the plurality of configurations (3031) in a list or ring buffer with a predefined length or storage capacity.

7. The method of any of the preceding claims, further comprising: in response to the collision event, ceasing execution of the task and ceasing recording of further configurations of the machine (201, 303).

8. The method of any of the preceding claims, wherein the collision event is detected based on data from at least one of: a mechanical switch, a pressure sensor, a torque sensor, an optical sensor, an ultrasonic sensor, a camera device, and/or a LiDAR device.

9. The method of any of the preceding claims, wherein each of the recorded plurality of configurations (3031) includes a timestamp associated with the recorded configuration.

10. The method of any of the preceding claims further comprising:
in response to the collision event, determining, by the one or more processors, based on the timestamps associated with each configuration, the recovery sequence of movements (3035) for the machine (201, 303);
ceasing execution of the task; and
using, by the one or more processors, the recovery sequence of movements to reverse the machine (201, 303) back to the predefined known safe position (204) after the collision event occurred.

11. The method of any of the preceding claims, wherein the motion planning algorithm includes any one of or combination of: graph search algorithms, sample-based algorithms, interpolating curve algorithms, and/or machine learning, ML, -based algorithms.

12. A system (300), comprising:
at least one machine (201, 303) configured to perform a task;
at least one recording device (301) communicatively connected to the machine (201, 303),
wherein the recording device (301) is configured to:
store a plurality of configurations (3031) of the machine (201, 303), each configuration representing a sequence of movements performed by the machine (201, 303) during execution of the task; and
a machine recovery device (302) configured to:
receive the stored plurality of configurations (3031) of the machine (201, 303) from the recording device (301);
calculate based on the plurality of recorded configurations (3031) a plurality of volumes occupied by the machine (201, 303) during execution of the task;
combine the plurality of volumes to generate a swept volume (3033) occupied by the machine (201, 303) during the execution of the task;
in response to a collision event, determine (403) based on the swept volume (3033), a recovery sequence of movements (3035) for the machine (201, 303); and
use the recovery sequence of movements (3035) to lead the machine (210, 303) back to a predefined known safe position (204) after the collision event occurred.

13. The system of any of the preceding claims, wherein the instructions further cause the one or more of the processors to perform the steps of the method according to any one of claims 1 to 11.

14. A non-transitory computer readable medium having processor-executable instructions stored thereon that, when executed by at least one processor, cause the at least one processor to perform the method according to any one of claims 1 to 11.

15. A computer program product comprising instructions which when executed by at least one processor, cause the at least one processor to perform the method according to any one of claims 1 to 11.
